# EUROPEAN PATENT APPLICATION

(11) **EP 1 394 788 A2**
(43) Date of publication of application: **03.03.2004**
(21) Application number: 03255463.6
(22) Date of filing: 02.09.2003
(51) Int. Cl.: G11B 7/24

(54) **Optical information recording medium**

(30) Priority: 02.09.2002 JP 2002256671
(71) Applicant: FUJI PHOTO FILM CO., LTD., Kanagawa-ken (JP)
(72) Inventor: Shiga, Hideaki, Odawara-shi Kanagawa (JP)
(74) Representative: Stevens, Jason Paul

(57) **Abstract**

The present invention provides an optical information recording medium comprising a substrate (1) in which recording areas (2) are formed in both surfaces thereof, and a light transmissible layer (3) on or over each of the recording areas, wherein the thickness of the substrate is larger than the thickness of each of the light transmissible layers; and an optical information recording medium comprising a substrate, reflecting layers on or over both surfaces of the substrate, recording layers, as recording areas, formed on or over the reflecting layers, and light transmissible layers formed on or over the respective recording areas, wherein the thickness of the substrate is larger than the thickness of each of the light transmissible layers.

## Description

### BACKGROUND OF THE INVENTION

### Field of the Invention

The present invention relates to an optical information recording medium, in particular, a heat-mode optical information recording medium.

### Description of the Related Art

In recent years, optical information recording media having a high recording capacity (recording density) have been demanded. For such a demand, an optical disc called recordable digital versatile disc (the so-called DVD-R) has been suggested ("Nikkei NewMedia", separate-volume "DVD", published in 1995). In general, this DVD-R has two discs, each of which is a disc wherein a recording layer comprising an organic dye, a light reflecting layer and a protective layer are laminated, in this order, on a transparent disc-shaped substrate in which guide grooves (pre-grooves) tracked with a radiated laser ray are made to have a narrow groove width, (for example, a half of the width of grooves in CD-Rs or less (i.e., 0.74 to 0.8 µm)), and the DVD-R has a structure wherein the two discs are adhered to each other in such a manner that their recording layers are positioned inside the discs. The recording and reproducing of information on this DVD-R are performed by radiating a visible laser ray, which usually has a wavelength of 630 to 680 nm, onto the DVD-R. In the DVD-R, higher density recording can be attained than in the CD-R.

However, in such a structure that a DVD as described above has, that is, a structure wherein two substrates are adhered to each other (see Japanese Patent Application Laid-Open (JP-A) Nos. 2000-195104, 2000-108515, 9-161320 etc.), the following problems may be caused: in the case that a laser wavelength for record or reproduction is made short with an increase in the recording density thereof, the thickness of the adhered substrates becomes thin so that the rigidity becomes insufficient; consequently, the handling performance or the storability thereof may deteriorate.

### SUMMARY OF THE INVENTION

In light of the above-mentioned situation, an object of the present invention is to provide an optical information recording medium having high memory capacity and excellent handling performance or storability.

The inventor made eager investigation to attain the above-mentioned object. As a result, the inventor has found out that the following invention can attain the object.

A first aspect of the invention provides an optical information recording medium comprising a substrate in which recording areas are formed in both surfaces thereof, and a light transmissible layer on or over each of the recording areas, wherein the thickness of the substrate is larger than the thickness of each of the light transmissible layers.

A second aspect of the invention provides an optical information recording medium comprising a substrate, reflecting layers on or over both surfaces of the substrate, recording layers, as recording areas, formed on or over the reflecting layers, and light transmissible layers formed on or over the respective recording areas, wherein the thickness of the substrate is larger than the thickness of each of the light transmissible layers.

### BRIEF DESCRIPTION OF THE DRAWINGS

Fig. 1 is a partial sectional view which illustrates a layer structure example of the optical information recording medium of the present invention.
Fig. 2 is a sectional view which roughly illustrates the structure of an injection molding machine.
Fig. 3 is a partial sectional view which illustrates another layer structure example of the optical information recording medium of the invention.

### DETAILED DESCRIPTION OF THE PREFERRED EMBODIMENTS

In the optical information recording medium of the present invention, recording areas are formed on both surface sides of a substrate, and further a light transmissible layer is formed on or over each of the recording areas. The thickness of the substrate is larger than the thickness of each of the light transmissible layers.

The recording areas are formed on both surface sides of the substrate, whereby a large memory capacity can be obtained. Moreover, the thickness of the substrate is made larger than that of each of the light transmissible layers, whereby the handling performance can be improved while good rigidity and environment resistance can be kept.

The word "recording area" in the present specification means an area where pits for representing information are beforehand made in a surface of a substrate in the case that the optical information recording medium of the invention is a ROM mode medium such as a CD-ROM or a DVD-ROM, and means an area where a recording layer in which information can be recorded or reproduced is formed on or over a substrate in the case that the optical information recording medium of the invention is a RAM mode medium such as a DVD-R or a DVD-RW.

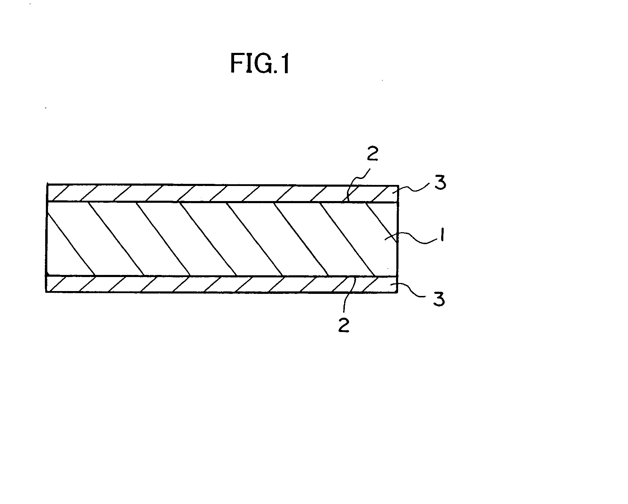

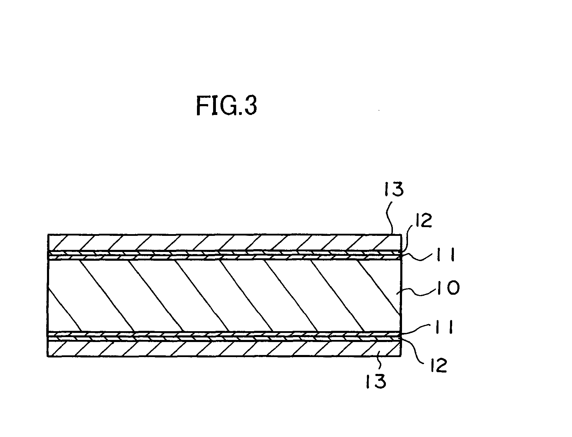

Accordingly, examples of the structure of the optical information recording medium of the invention are illustrated in Figs. 1 and 3.

In the optical information recording medium illustrated in Fig. 1, recording areas 2, in which pits making it possible to reproduce information by radiation of a laser ray are made, are formed on both surfaces of a substrate 1. A light transmissible layer 3 is formed on each of the recording areas 2.

The width of the pits is preferably from 80 to 250 nm, more preferably from 100 to 220 nm. The height of the pits is preferably from 20 to 150 nm, more preferably from 30 to 100 nm.

The pitch of tracks is preferably from 200 to 400 nm, more preferably from 250 to 350 nm.

The material of the substrate 1 may be arbitrarily selected from various materials which are used as a substrate material of conventional optical information recording media.

Specific examples thereof include glass; polycarbonate; acrylate resins such as polymethyl methacrylate; vinyl chloride resins such as polyvinyl chloride and vinyl chloride copolymer; epoxy resins; amorphous polyolefins; polyesters; and metals such as aluminum. If desired, they may be used in combination.

Among the above-mentioned materials, polycarbonate and amorphous polyolefins are preferred, and polycarbonate is particularly preferred from the viewpoints of moisture resistance, dimensional stability, low costs and other factors.

The thickness of the substrate 1 is preferably from 0.6 to 1 . 2 mm, more preferably from 0 . 8 to 1.1 mm in order to give a sufficient rigidity.

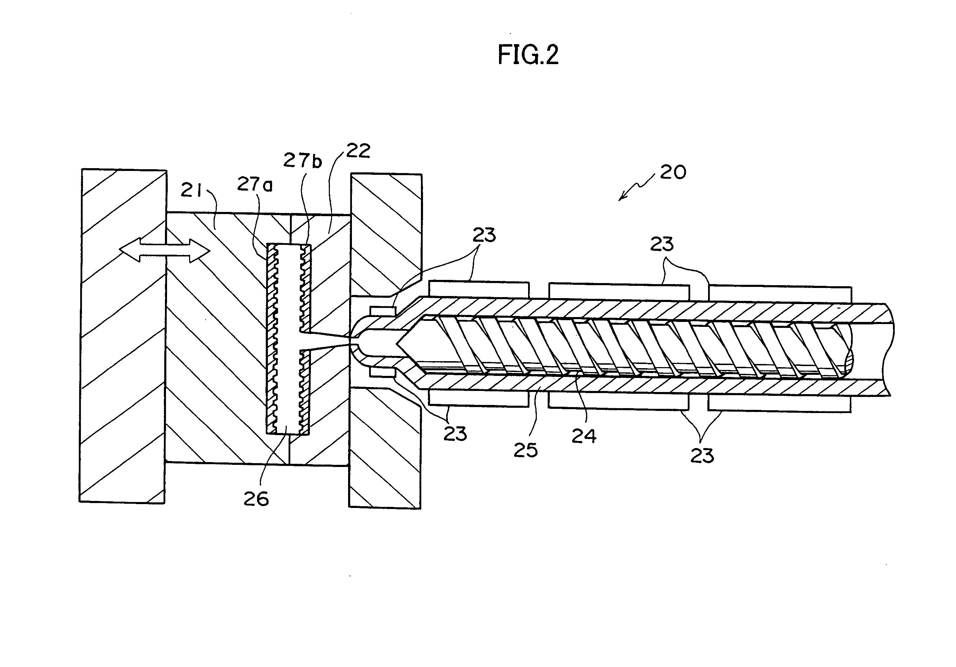

The substrate 1 wherein the given pits are made in both of its surfaces is formed, for example, by means of an injection molding machine 20 illustrated in Fig. 2. The injection molding machine 20 is a machine obtained by improving an ordinary injection molding machine, and has a structure wherein stampers 27a and 27b are formed on the surfaces of a cavity 26 between a moving side molding 21 and a fixed side molding 22. Besides, the machine 20 has a cylinder 26 for injecting a melted resin into the cavity 26.

The resin (substrate material) inside the cylinder 26 is heated by means of a heater 23, so as to turn into a melted state. The melted resin is pushed into the cavity 26, made by clamping the moving side molding 21 and the fixed side molding 22, by means of a screw 24, and then subjected to cooling treatment and other treatments to form a substrate onto which pits made in the stampers 27a and 27b are transferred.

The light transmissible layer 3 functions as a protective layer for preventing the invasion of water content or the generation of injuries. Preferred examples of the material which constitutes the light transmissible layer 3 include a transparent sheet (or transparent film) on which an adhesive layer made of an adhesive agent is formed, ultraviolet ray-curable resin, visible ray-curable resin, heat-curable resin, and silicon dioxide.

The material of the transparent sheet is not particularly limited if the material has transparency. Preferred examples thereof include polycarbonate, polyethylene terephthalate (PET), and cellulose triacetate. A more preferred example thereof is a material having a moisture absorption coefficient of 5% or less at 23°C and 50% RH.

It is essential that the thickness of the transparent sheet is smaller than that of the above-mentioned substrate, and the thickness is preferably from 0.05 to 0.4 mm, more preferably from 0.08 to 0.2 mm. If the thickness of the transparent sheet is less than 0.05 mm, the thickness of the adhesive layer made of the adhesive agent becomes large so that thickness unevenness may be generated. If the thickness is more than 0.4 mm, the thickness may not satisfy the standard of the thickness of the light transmissible layer with ease on occasion.

Examples of the adhesive agent include acrylic type, rubber type and silicone type adhesive agents. Considering the easiness of polymer design, endurance, the adhesiveness between the adhesive agent and the transparent sheet, and other factors, the acrylic type adhesive agent is preferred.

In the case that an ultraviolet ray-curable resin is used in the light transmissible layer, examples of the resin include SD-640 manufactured by Dainippon Ink & Chemicals, Inc., SD-347 manufactured by Dainippon Ink & Chemicals, Inc., SD-694 manufactured by Dainippon Ink & Chemicals, Inc., and SKCD1051 manufactured by SKC Co., Ltd.

When the ultraviolet ray-curable resin is used, it is preferred to form the light transmissible layer by spin coating. If spin coating is used, the light transmissible layer can be formed without damaging the substrate or other members. The rotation number of the substrate in the spin coating is preferably from 50 to 8000 rpm, more preferably from 100 to 5000 rpm in order to make the layer homogeneous.

In the case that the ultraviolet ray-curable resin is used in the light transmissible layer, the light transmissible layer, which has not been set, is formed by spin coating and subsequently ultraviolet rays are radiated onto the layer from an ultraviolet lamp (metal halide lamp) positioned above the layer so as to cure the ultraviolet ray-curable resin.

In order to remove the thickness unevenness of the light transmissible layer to be formed, it is allowable to perform appropriately a process in which the resin is allowed to stand for given hours before the resin is cured, or some other process.

The light transmissible layer needs to have transparency since the layer is used as a laser ray path, as will be described later. The word "transparency" means such a transparency that recording light and reproducing light are transmitted through the light transmissible layer (transmissivity: 90% or more).

It is indispensable that the thickness of the light transmissible layer is smaller than the thickness of the substrate. (When the transparent sheet is used, the light transmissible layer is composed of the transparent sheet and the adhesive layer made of the adhesive agent.) Specifically, the thickness is preferably from 3 to 150 µm, more preferably from 20 to 110 µm.

It is preferred that the light transmissible layers on or over both the surfaces of the substrate are formed to have the same thickness. This makes it possible to record information on both the surfaces and reproduce the information from both the surfaces with the same pickup, and form both the surfaces by means of the same machine in the production process of the present optical information recording medium. Furthermore, the equivalency of both the surfaces makes it possible to produce an advantageous effect such that warp or the like is not easily generated at the time of the production or in an environment having, for example, high temperature and high humidity.

It is preferred that a hard coat layer is further formed on the light transmissible layer. The formation of the hard coat layer makes it possible to protect the surface of the optical information recording medium from being injured, and improve the storability or the handling performance.

The hard coat layer may be formed on the light transmissible layer over the single surface of the substrate, or hard coat layers may be formed on the light transmissible layers over both the surfaces of the substrate.

The material of the hard coat layer is preferably a radioactive ray-curable resin. Examples thereof include acrylic acid esters, methacrylic acid esters, methacrylic acid amides, ally compounds, vinyl ethers and vinyl esters.

The thickness of the hard coat layer is preferably from 1 to 20 µm, more preferably from 3 to 10 µm.

The hard coat layer may be formed by preparing a coating-solution containing the radioactive ray-curing resin, applying this solution onto the light transmissible layer and radiating radioactive rays (electron rays or ultraviolet rays) on the applied solution so as to cure the solution.

In the optical information recording medium illustrated in Fig. 3, reflecting layers 11 are formed on both surfaces of a substrate 10, and a recording layer 12, as a recording area in which information can be recorded, is formed on each of the reflecting layers 11. A light transmissible layer 13 is formed on each of the recording layers 12.

The above-mentioned structure is a mere example, and an undercoat layer may be formed on a surface of the substrate 10 or an intermediate layer or some other layer may be formed between the recording layer 12 and the light transmissible layer 13.

For the substrate 10, there can be used the same material as for the substrate 1 illustrated in Fig. 1. The thickness of the substrate 10 is also the same as that of the substrate 1 illustrated in Fig. 1.

Guide grooves for tracking or irregularities (called pre-grooves or grooves) for representing information on address signals and others are made in both surfaces of the substrate 10. In order to attain a higher recording density, it is preferred to use a substrate in which pre-grooves having a narrower track pitch are made.

Specifically, the track pitch of the pre-grooves is preferably from 300 to 600 nm. The depth of the pre-grooves (groove depth) is preferably from 40 to 150 nm.

An undercoat layer is preferably formed on the surface of the substrate before the reflecting layer 11, which will be detailed later, is formed thereon in order to improve the planarity or improve the adhesive force.

Examples of the material of the undercoat layer include polymer materials such as polymethyl methacrylate, acrylic acid/methacrylic acid copolymer, styrene/maleic anhydride copolymer, polyvinyl alcohol, N-methylolacrylamide, styrene/vinyltoluene copolymer, chlorosulfonated polyethylene, nitrocellulose, polyvinyl chloride, chlorinated polyolefin, polyester, polyimide, vinyl acetate/vinyl chloride copolymer, ethylene/vinyl acetate copolymer, polyethylene, polypropylene, and polycarbonate; and surface modifiers such as a silane coupling agent.

The undercoat layer can be formed by dissolving or dispersing one or more selected from the above-mentioned materials in a suitable solvent to prepare a coating-solution, and applying this coating-solution onto the surface of the substrate by a coating method such as spin coating, dip coating or extrusion coating. The thickness of the undercoat layer is generally from 0.005 to 20 µm, preferably from 0.01 to 10 µm.

For the reflecting layer 11, there is used a light reflecting material having a high reflectivity to a laser ray. The reflectivity is preferably 70% or more.

Examples of the light reflecting material having a high reflectivity include metals or semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi; and stainless steel. These light reflecting materials may be used alone, in combination of two or more thereof, or in an alloy form.

Among these examples, Cr, Ni, Pt, Cu, Ag, Au, Al and stainless steel are preferred. Au, Ag, Al and alloys thereof are more preferred. Au, Ag and alloys thereof are most preferred.

The reflecting layer 11 can be formed by evaporating, sputtering or ion-plating one or more selected from the above-mentioned light reflecting materials onto the substrate 10. The thickness of the reflecting layer 11 is preferably from 10 to 300 nm, more preferably from 50 to 200 nm.

When the reflectivity of the recording layer 12, which will be detailed below, is sufficiently large, the reflecting layer 11 is not essential.

The recording layer 12 is formed on the face of the substrate 10 in which the grooves are made. (In the case that the reflecting layer is formed, the recording layer 12 is formed on the reflecting layer.)

The recording layer 12 may be a layer containing an organic dye, or a layer containing a phase-change recording material (i.e., a phase-change recording layer).

The organic dye is preferably at least one selected from triazole compounds, phthalocyanine compounds, porphyrin compounds, aminobutadiene compounds, melocyanine compounds, cyanine compounds and other compounds. The phthalocyanine compound is preferably at least one selected from alkoxy-substituted products, sulfonamide-substituted products, sulfamoyl-substituted products, and sulfonic acid-substituted products.

A dye described in the following may be used together: JP-A Nos. 4-74690, 8-127174, 11-53758, 11-334204, 11-334205, 11-334206, 11-334207, 2000-43423, 2000-108513, 2000-158818, etc.

In the case that the recording layer 12 is a layer containing a dye, the recording layer 12 can be formed by dissolving a recording material made of the dye (organic substance or the like), together with a binder and other components, into a suitable solvent to prepare a recording layer coating-solution, applying this recording layer coating-solution on the substrate 10 or the reflecting layer 11 formed on the substrate 10 to form a coating, and the drying the coating. The concentration of the recording material in the recording layer coating-solution is preferably from 0.01 to 15% by mass, more preferably from 0.1 to 10% by mass, still more preferably from 0.5 to 5% by mass, and most preferably from 0.5 to 3% by mass.

As the method for dissolving the recording material and so on, ultrasonic treatment, treatment with a homogenizer, heating treatment, or some other treatment can be used.

Examples of the solvent used when the recording layer coating-solution is prepared include esters such as butyl acetate, methyl lactate, ethyl lactate and cellosolve acetate; ketones such as methyl ethyl ketone, cyclohexanone, and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol, n-butanol diacetone alcohol; fluorine-containing solvents such as 2,2,3,3-tetrafluoropropanol; glycol ethers such as ethylene glycol monomethyl ether, ethylene glycol monoethyl ether and propylene glycol monomethyl ether. These solvents may be used alone or in combination of two or more thereof, considering the solubility of the used recording material. Dependently on purpose, various additives such as an antioxidant, a UV absorber, a plasticizer, and a lubricant may be added to the coating-solution.

In the case that the binder is used, examples thereof include natural organic polymer materials such as gelatin, cellulose derivatives, dextran, rosin and rubber; and synthetic organic polymers, for example, hydrocarbon resins such as polyethylene, polypropylene, polystyrene and polyisobutyrene; vinyl resins such as polyvinyl chloride and polyvinylidene chloride, polyvinyl chloride/polyvinyl acetate copolymer; acryl resins such as polymethyl acrylate and polymethyl methacrylate; polyvinyl alcohol; chlorinated polyethylene; epoxy resins; butyral resins; rubber derivatives; initial condensates of a heat-curable resin such as phenol/formaldehyde resin. In the case that the binder is also used as the material of the recording layer, the use amount of the binder is generally from 0.01 to 50 parts, preferably from 0.1 to 5 parts by mass per part by mass of the recording material. The concentration of the recording material in the thus prepared coating-solution is generally from 0.01 to 10% by mass, preferably from 0.1 to 5% by mass.

Examples of the coating method of the recording material coating-solution include spray, spin coating, dip coating, roll coating, blade coating, doctor roll, and screen printing methods. The recording layer 12 may be a monolayered or multilayered structure. The thickness of the recording layer 12 is generally from 20 to 500 nm, preferably from 30 to 300 nm, and more preferably from 50 to 100 nm.

If the coating temperature is from 23 to 50°C, no problems are caused. The coating temperature is preferably from 24 to 40°C, more preferably from 25 to 37°C.

In order to improve the light resistance of the recording layer 12, various discoloring inhibitors may be incorporated into the layer 12.

As the discoloring inhibitor, a singlet oxygen quencher is generally used. Examples of the singlet oxygen quencher are described in known publications such as patent specifications.

Specific examples thereof include singlet oxygen quenchers described in JP -A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, JP-B Nos. 1-38680 and 6-26028, DE Patent No. 350399, and page 1141 of Journal of the Chemical Society of Japan (October in 1992).

The use amount of the discoloration inhibitor such as the singlet oxygen quencher is usually from 0.1 to 50%, preferably from 0.5 to 45%, still more preferably from 3 to 40%, and most preferably from 5 to 25% by mass of the compound(s) for recording.

As the recording layer, a phase-change recording layer can be used. The phase-change recording layer is a layer made of a material capable of repeating a phase-change between a crystal phase and an amorphous phase by receiving radiation of a laser ray.

An example thereof is a phase-change recording layer in which a phase-change between a crystal phase and an amorphous phase is repeated in a manner as described in the following. When information is recorded, concentrated laser ray pulses are radiated onto the layer for a short time to melt the phase-change recording layer partially. The melted portion is rapidly cooled by thermal diffusion, and solidified so that a record mark in an amorphous state is formed. When the information is erased, a laser ray is radiated onto the record mark to heat the record mark up to a temperature which is not more than the melting point of the recording layer and not less than the crystallization temperature thereof and further the record mark is slowly cooled. In this way, the amorphous record mark is crystallized so as to be returned into an original non-record state.

Specific examples of the material which constitutes the phase-change recording layer include Sb-Te, Ge-Sb-Te, Pd-Ge-Sb-Te, Nb-Ge-Sb-Te, Pd-Nb-Ge-Sb-Te, Pt-Ge-Sb-Te, Co-Ge-Sb-TE, In-Sb-Te, Ag-In-Sb-Te, Ag-V-In-Sb-Te, Ag-Ge-In-Sb-Te alloys. Particularly preferred are Ge-Sb-Te and Ag-In-Sb-Te alloys since they make it possible to rewrite information many times.

The thickness of the phase-change recording layer is preferably set to 10 to 50 nm, more preferably 15 to 30 nm.

The phase-change recording layer can be formed by a gas phase thin film depositing method such as sputtering or vacuum evaporation.

The same light transmissible layer 13 as illustrated in Fig. 1 is formed on each of the recording layers 12. That is, conditions about the material used in the light transmissible layer 13, the thickness thereof, and so on are the same as for the light transmissible layer 13 illustrated in Fig. 1. The above-mentioned hard coat layer may be formed on the light transmissible layer 13.

An intermediate layer (not illustrated) may be formed between the recording layer 12 and the light transmissible layer 13 to protect the recording layer.

The thickness of the intermediate layer is preferably from 1 to 300 µm, more preferably from 3 to 110 nm.

The material which constitutes the intermediate layer is not particularly limited if a laser ray can be transmitted through the material. The material is preferably a dielectric. Specific examples thereof include inorganic oxides, nitrides and sulfides such as ZnS, TiO₂, SiO₂, ZnS-SiO₂, GeO₂, Si₃N₄, Ge₃N₄, and MgF₂. ZnS-SiO₂ and SiO₂ are preferred.

The above has described the optical information recording medium of the invention, referring to Figs. 1 and 3, but the invention is not limited to the structures illustrated Figs. 1 and 3, and may be made into various structures.

For instance, one surface of a substrate may be made into the so-called ROM form, in which pits are made, and the other surface may be made into the so-called RAM form, in which a recording layer is formed.

The following will describe a method of recording information to the optical information recording medium of the invention in the case that the optical information recording medium has a recording layer.

For example, information is recorded to the optical information recording medium as follows.

First, a recording laser ray is radiated onto the optical information recording medium from the light transmissible layer side thereof while the medium is rotated at a constant linear velocity. In the case that the track pitch of the medium is narrower than that of DVDs, DVD-Rs or the like so that the recording density thereof is larger, a laser ray having a wavelength of 500 nm or less can be radiated.

In the case that the recording layer is a layer containing a dye, the recording layer absorbs the radiated laser ray so that the temperature of the recording layer rises up locally. As a result, a physical or chemical change (for example, the generation of pits) is caused so that the optical property of the layer changes. By this optical property change, information is recorded.

In the meantime, in the case that the recording layer is a layer containing a phase-change recording material, the radiation of the laser ray and rapid cooling cause a crystallographic phase-change (i.e., a change from a crystal state to an amorphous state) in the site onto which the laser ray is radiated. As a result, information is recorded.

A laser ray source having an emission wavelength of 500 nm or less is, for example, a bluish purple color semiconductor laser having an emission wavelength of 390 to 415 nm, or a blush purple color SHG laser having a center emission wavelength of about 430 nm.

In the case of using a laser ray source having an emission wavelength of 500 nm or less, the numerical aperture (NA) of an object lens used in a pickup is preferably 0.6 or more, more preferably 0.80 or more in order to make the recording density high.

When the information recorded as described above is reproduced, or when information is reproduced in the case that pits are beforehand made in the substrate of the optical information recording medium of the invention, for example, the reproduction can be attained as follows.

While the optical information recording medium is rotated as the same linear velocity as described above, a laser ray having a wavelength equal to or smaller than the wavelength of the laser ray used to record the information is radiated onto the medium from the light transmissible layer side. In this way, the reflected light from the medium is detected to reproduce the information.

### EXAMPLES

The present invention will be described in more detail by way of the following examples. However, the invention is not limited to the examples.

### [Example 1]

As illustrated in Fig. 1, the stampers 27a and 27b are set to the moving side molding 21 and the fixed side molding 22, respectively, to form an injection-molded polycarbonate substrate (trade name: Panlite AD5503, manufactured by Teijin Chemicals Ltd.) having, on both surfaces thereof, spiral grooves, and having a thickness of 1.0 mm and a diameter of 120 mm (100 nm, width: 120 nm, track pitch: 320nm).

Ag is sputtered onto each of the surfaces of the substrate, to form reflecting layers having a thickness of 100 nm.

Thereafter, a phthalocyanine dye (trade name: Orazole Blue GN, manufactured by Ciba Specialty Chemicals Inc. ) is added to 2,2,3,3-tetrafluoropropanol, and the solution is subjected to ultrasonic treatment for 2 hours so that the dye is dissolved. In this way, a dye coating-solution is prepared. This dye coating-solution is applied to one of the reflecting layers by spin coating at 23°C and 50% RH while the rotation number is changed from 300 rpm to 4000 rpm. Thus, a recording layer (thickness: 80 nm) is formed. In the same way, a recording layer (thickness: 80 nm) is formed on the other reflecting layer.

The resultant is stored at 23°C and 50% RH for 1 hour, and then ZnS and SiO₂ are sputtered onto each of the recording layers to form an intermediate layer having a thickness of 5 nm on each of the surfaces.

After the formation of the intermediate layers, an adhesive agent adhered transparent sheet (thickness of only the transparent sheet: 0.08 mm, PUREACE manufactured by Teijin Ltd.) is adhered, as a light transmissible layer, onto each of the intermediate layers to produce an optical information recording medium. The thickness of the adhesive layer made of the adhesive agent is 0.02 mm after adhesion of the transparent sheet.

About the produced optical information recording medium, a property (carrier noise ratio) thereof and the storability thereof are evaluated.

The carrier noise ratio (C/N) as a disc property is measured under room temperature conditions (25°C and 50% RH) as follows.

That is, recording and reproducing are performed onto the produced optical information recording medium, using signals having a single frequency (2T: 0. 13 µm) , by means of a recording and reproducing evaluating device (DDU1000 manufactured by Pulstec Industrial Co., Ltd.), on which a pick up (laser wavelength: 405 nm, NA: 0.85) is mounted, at a clock frequency of 66 MHz and a linear velocity of 5.6 m/s. The C/N is measured with a spectral analyzer.

About the evaluation of the storability, the produced optical information recording medium is stored at 80°C and 85% RH, and then the warp amount thereof is observed.

The C/N (disc evaluation result) is 50 dB, which is a good value. A change in the warp amount about the storability is 0.3° or less. It can be considered that this is based on improvement in the rigidity since the thickness of the substrate is made larger than that of each of the light transmissible layers.

From the above-mentioned results, it is understood that the optical information recording of Example 1 is superior in storability and handling performance, and can be put to practical use. It is also understood that the optical information recording medium of Example 1 has a large memory capacity since the medium has, on both surfaces, recording areas and the track pitch thereof is narrower than that of ordinary DVDs or the like.

## Claims

1. An optical information recording medium comprising a substrate in which recording areas are formed in both surfaces thereof, and a light transmissible layer on or over each of the recording areas, wherein the thickness of the substrate is larger than the thickness of each of the light transmissible layers.

2. An optical information recording medium according to claim 1, wherein the thicknesses of the light transmissible layers are the same.

3. An optical information recording medium according to any preceding claim, wherein the thickness of each of the light transmissible layers is from 3 to 150 µm.

4. An optical information recording medium according to claim 1 or 2, wherein the thickness of each of the light transmissible layers is from 0.05 to 0.4 mm.

5. An optical information recording medium according to any preceding claim, wherein each of the light transmissible layers is made of an adhesive agent and a sheet or a film.

6. An optical information recording medium according to any of claims 1 to 4, wherein each of the light transmissible layers is made of at least one selected from ultraviolet ray-curable resin, visible ray-curable resin, heat-curable resin and silicon dioxide.

7. An optical information recording medium according to any preceding claim, wherein a hard coat layer is further formed on or over at least one of the light transmissible layers.

8. An optical information recording medium according to claim 7, wherein the hard coat layer is made of radioactive ray-curable resin.

9. An optical information recording medium according to claim 7 or claim 8, wherein the thickness of the hard coat layer is from 1 to 20 µm.

10. An optical information recording medium according to any preceding claim, wherein the thickness of the substrate is from 0.6 to 1.2 mm.

11. An optical information recording medium comprising a substrate, reflecting layers on or over both surfaces of the substrate, recording layers, as recording areas, formed on or over the reflecting layers, and light transmissible layers formed on or over the respective recording areas, wherein the thickness of the substrate is larger than the thickness of each of the light transmissible layers.

12. An optical information recording medium according to claim 11, wherein the thicknesses of the light transmissible layers are the same.

13. An optical information recording medium according to claim 11 or claim 12, wherein the thickness of each of the light transmissible layers is from 3 to 150 µm.

14. An optical information recording medium according to claim 11 or claim 12, wherein the thickness of each of the light transmissible layers is from 0.05 to 0.4 mm.

15. An optical information recording medium according to any of claims 11 to 14, wherein each of the light transmissible layers is made of an adhesive agent and a sheet or a film.

16. An optical information recording medium according to any of claims 11 to 14, wherein each of the light transmissible layers is made of at least one selected from ultraviolet ray-curable resin, visible ray-curable resin, heat-curable resin and silicon dioxide.

17. An optical information recording medium according to any of claims 11 to 16, wherein a hard coat layer is further formed on or over at least one of the light transmissible layers.

18. An optical information recording medium according to claim 17, wherein the hard coat layer is made of radioactive ray-curable resin.

19. An optical information recording medium according to claim 17 or claim 18, wherein the thickness of the hard coat layer is from 1 to 20 µm.

20. An optical information recording medium according to any of claims 11 to 19, wherein the thickness of the substrate is from 0.6 to 1.2 mm.
